# EUROPEAN PATENT APPLICATION

(11) **EP 4 628 898 A1**
(43) Date of publication of application: **08.10.2025**
(21) Application number: 23909627.4
(22) Date of filing: 31.10.2023
(51) Int. Cl.: G01N 35/00, G01N 35/02, G01N 35/04

(54) **ANALYSIS APPARATUS AND SCHEDULING METHOD**

(30) Priority: 29.12.2022 CN 202211711787
(71) Applicant: Shenzhen Increcare Biotech Co., Ltd, Shenzhen, Guangdong 518055 (CN)
(72) Inventor: HE, Chongdong, Dongguan, Guangdong 523808 (CN); HUANG, Xin, Dongguan, Guangdong 523808 (CN); HUANG, Xiaofeng, Dongguan, Guangdong 523808 (CN); HE, Taiyun, Dongguan, Guangdong 523808 (CN)
(74) Representative: Novagraaf Technologies
(86) International application number: PCT/CN2023/128833
(87) International publication number: WO 2024/139694

(57) **Abstract**

An analysis device and a scheduling method. The analysis device includes a sample adding unit, an incubation unit, a washing and separation unit, a photometric unit, and a dual-gripper assembly, wherein the dual-gripper assembly includes a first limiting guide rail and a first gripper and a second gripper which are able to reciprocate along the first limiting guide rail, and both the first gripper and the second gripper are able to perform a reactor transfer operation on the incubation unit. The present invention solves the problem of poor usage performance of a sample analysis device.

## Description

The present invention claims priority of patent application no. 202211711787.3, filed with the China National Intellectual Property Administration on 29 December 2022, and entitled "Analysis Device and Scheduling Method".

### Technical Field

The present invention relates to the field of medical examination and analysis apparatuses, and in particular, to an analysis device and a scheduling method.

### Background

In an immunoassay analyzer, components are classified on the basis of different functions into several relatively independent units, such as a sample reagent dispensing unit, a mixing unit, an incubation unit, and a washing and separation unit; operating positions for allowing reactors to enter and exit are provided between the units; and disposable reactors are scheduled between these units by means of a mechanical gripper so as to complete the whole test flow. The mechanical grippers in the related art generally include linear grippers and swing arm grippers. Two-dimensional linear gripper may move in a vertical direction and a horizontal direction simultaneously, and three-dimensional linear grippers may move in a vertical direction and two horizontal directions simultaneously. A swing arm gripper positions the gripper by means of vertical movement of the swing arm and rotation of the swing arm around the center of an arc. The horizontal movement trajectory of the swing arm is an arc, and it is necessary that reactor operating positions are located on an arc.

An incubation unit generally includes two types, i.e. an incubation carousel and an incubation member, has a horizontal working surface provided with wells for receiving reactors, and is mainly used for carrying the reactors and incubating at a constant temperature. An incubation carousel may rotate horizontally during testing, rotating a target well position to a corresponding operating position to allow a mechanical gripper to place or grip a reactor. An incubation member has a square structure, has a working surface provided with reactor well positions uniformly arranged in rows and columns, is generally fixed, and needs a three-dimensional linear gripper to scheduled reactors thereon.

In the related art, reactor well positions may only be arranged on the periphery of an incubation carousel, and the central region of an incubation carousel has a relatively large vacant area, resulting in a low space utilization rate and a large size, which is adverse to the miniaturization of the whole machine. Furthermore, in order to carry more reactors, a high-speed large-scale instrument generally requires assemblies with larger sizes, and the space required by a mechanical gripper for scheduling is large; however, since a three-dimensional gripper has a large size and a large weight, the movement speed cannot be further increased, which is difficult to meet requirements for high-speed timing motion; thus, in this case, a three-dimensional gripper is generally replaced with two or more two-dimensional linear grippers. However, the increase of the number of two-dimensional linear grippers will increase the manufacturing cost and reduce the operating reliability of the whole machine; moreover, sufficient avoidance space between several mutually independent two-dimensional linear grippers is required, which inevitably results in a larger layout space of the whole machine.

Therefore, there is a problem of poor usage performance of a sample analysis device in the related art.

### Summary

Embodiments of the present invention provide an analysis device and a scheduling method, for solving the problem of poor usage performance of a sample analysis device in the related art.

In one embodiment of the present invention, provided is an analysis device, including a sample adding unit, an incubation unit, a washing and separation unit, a photometric unit, and a dual-gripper assembly, wherein the dual-gripper assembly includes a first limiting guide rail and a first gripper and a second gripper which are able to reciprocate along the first limiting guide rail, and both the first gripper and the second gripper are able to perform a reactor transfer operation on the incubation unit.

In an embodiment of the present invention, the dual-gripper assembly is able to transfer a reactor from any one of the sample adding unit, the incubation unit, the washing and separation unit, and the photometric unit.

In an embodiment of the present invention, the incubation unit at least includes a reaction incubation region and a substrate incubation region, the first gripper is able to at least transfer the reactor between the reaction incubation region and the sample adding unit, and the second gripper is able to at least transfer the reactor between the substrate incubation region and the washing and separation unit.

In an embodiment of the invention, the first gripper is able to further transfer the reactor between at least two of the incubation unit, the sample adding unit, and the photometric unit.

In an embodiment of the invention, the second gripper is able to further transfer the reactor between at least two of the incubation unit, the washing and separation unit, and the photometric unit.

In an embodiment of the present invention, there are a plurality of reactors, the incubation unit includes an incubation driving assembly and an incubation member, the incubation member is provided with the reaction incubation region and the substrate incubation region, and the incubation driving assembly is able to drive the incubation member to move relative to the first limiting guide rail in a horizontal direction, enabling a target reactor of the plurality of reactors of the incubation unit to be positioned on a movement trajectory of the dual-gripper assembly.

In an embodiment of the present invention, the incubation driving assembly is provided with a second limiting guide rail, the second limiting guide rail and the first limiting guide rail being perpendicular to each other in a horizontal direction, and the incubation member is able to reciprocate on the second limiting guide rail.

In an embodiment of the present invention, the incubation member is provided with a plurality of reactor receiving holes which are arranged in a rectangular array on the incubation member.

In an embodiment of the present invention, the first limiting guide rail is a linear rail, and the sample adding unit, the incubation unit, and the washing and separation unit are sequentially arranged at intervals in a length direction of the first limiting guide rail.

In an embodiment of the present invention, the photometric unit is arranged in the length direction of the first limiting guide rail between the incubation unit and the washing and separation unit.

The present invention also provides a scheduling method which is applied to the described analysis device and includes: when a reaction incubation operation is to be performed, the first gripper removing the reactor from the sample adding unit and placing the reactor into the reaction incubation region of the incubation unit; when a magnetic separation and washing operation is to be performed, the second gripper removing the reactor from the reaction incubation region and placing the reactor into the washing and separation unit; and when a substrate incubation operation is to be performed, the second gripper removing the reactor from the washing and separation unit and placing the reactor into the substrate incubation region of the incubation unit.

In an embodiment of the present invention, the scheduling method further includes: when the magnetic separation and washing operation has been done and a second-step reagent needs to be added, the second gripper removing the reactor from the washing and separation unit and placing the reactor into the substrate incubation region, and then the first gripper removing the reactor from the substrate incubation region and placing the reactor into the sample adding unit.

In an embodiment of the present invention, the first gripper and the second gripper move in the same direction, and the first gripper and the second gripper ascend or descend simultaneously. The scheduling method further includes: while the first gripper removes the reactor from the sample adding unit and places the reactor into the reaction incubation region, the second gripper moving from the reaction incubation region to the washing and separation unit; and/or while the first gripper removes the reactor from the incubation unit and places the reactor into the sample adding unit, the second gripper removing the reactor from the washing and separation unit and placing the reactor into the substrate incubation region.

By applying the technical solution of the present invention, the analysis device in the present invention includes the sample adding unit, the incubation unit, the washing and separation unit, the photometric unit, and the dual-gripper assembly, wherein the dual-gripper assembly includes the first limiting guide rail and the first gripper and the second gripper which is able to reciprocate along the first limiting guide rail, and both the first gripper and the second gripper are able to perform the reactor transfer operation on the incubation unit.

When the analysis device in the present invention is used, since the dual-gripper assembly has the first gripper and the second gripper which are able to move along the first limiting guide rail, it may operate different reactors by means of the first gripper and the second gripper simultaneously, or move the same reactor to different positions in different periods by means of the first gripper and the second gripper, thereby accomplishing operations such as dispensing, mixing, incubation, washing and separation, and photometry of sample reagents. Thus, by means of the analysis device in the present invention, reactors may be gripped or released in the sample adding unit, the incubation unit, the photometric unit, and the washing and separation unit by means of the movement of the first gripper and the second gripper along the first limiting guide rail, thereby accomplishing the measurement and analysis of a target analyte contained in a sample to be tested. Thus, the analysis device in the present invention effectively solves the problem of poor usage performance of a sample analysis device in the related art.

### Brief Description of the Drawings

The drawings constituting a part of the invention are intended to provide better understanding of the present invention, and the schematic embodiments of the present invention and the description thereof are used to explain the present invention, but not to limit the present invention improperly. In the drawings:
Fig. 1 is a structural schematic diagram of an analysis device according to an embodiment of the present invention;
Fig. 2 is a schematic diagram showing the positional relationship between a dual-gripper assembly and an incubation unit of the analysis device in Fig. 1;
Fig. 3 is a sequence diagram of coordinated movement of an incubation unit and a first gripper and a second gripper of a dual-gripper assembly within a time interval in an embodiment of the present invention; and
Fig. 4 is a schematic diagram of a structure of a dual-gripper assembly of an analysis device according to an embodiment of the present invention.

The drawings contain the following reference signs:
10. guide rail assembly; 11. mounting plate; 12. guide rail body; 20. linear grip; 30. driving assembly; 31. driving motor; 32. synchronous belt structure; 40. detection assembly; 50. dual-gripper assembly; 60. sample adding unit; 70. incubation unit; 71. reaction incubation region; 72. substrate incubation region; 73. incubation driving assembly; 74. incubation member; 80. photometric unit; 100. washing and separation unit.

### Detailed Description of the Embodiments

It should be noted that, without conflict, the embodiments and the features of embodiments of the present invention is able to be combined. The present invention will be described below with reference to the drawings and embodiments in detail.

In order to solve the problem of poor usage performance of a sample analysis device in the related art, the present invention provides an analysis device and a scheduling method.

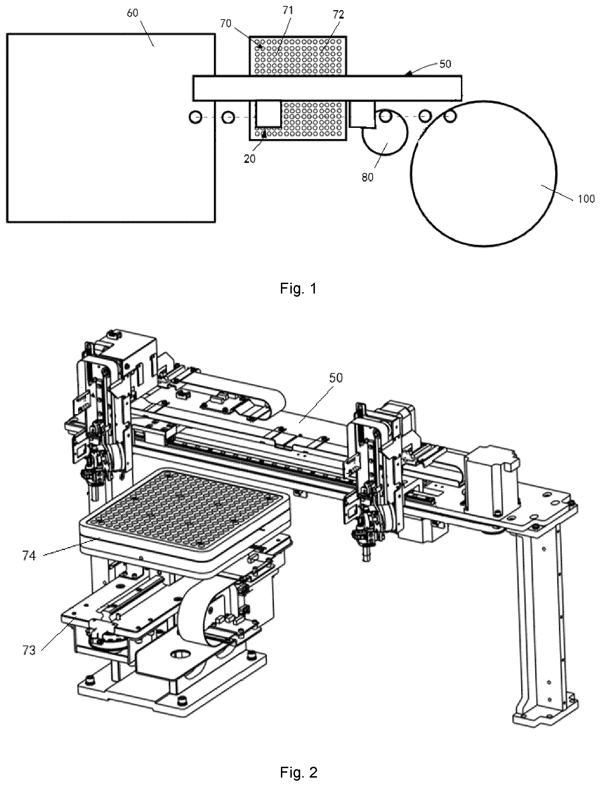

As shown in Fig. 1 and Fig. 2, the analysis device in the present invention includes a sample adding unit 60, an incubation unit 70, a washing and separation unit 100, a photometric unit 80, and a dual-gripper assembly 50, wherein the dual-gripping assembly 50 is able to transfer a reactor from any one of the sample adding unit 60, the incubation unit 70, the washing and separation unit 100, and the photometric unit 80, the dual-gripper assembly 50 includes a first limiting guide rail and a first gripper and a second gripper which are able to reciprocate along the first limiting guide rail, and both the first gripper and the second gripper are able to perform the reactor transfer operation on the incubation unit 70.

When the analysis device in the present invention is used, since the dual-gripper assembly 50 has the first gripper and the second gripper which may move along the first limiting guide rail, operations may be performed on different reactors simultaneously by means of the first gripper and the second gripper, or the same reactor is able to be moved to different positions in different periods by means of the first gripper and the second gripper, thereby accomplishing operations such as dispensing, mixing, incubation, washing and separation, and photometry of sample reagents. Thus, by means of the analysis device in the present invention, reactors may be gripped or released in the sample adding unit 60, the incubation unit 70, the photometric unit 80, and the washing and separation unit 100 by means of the movement of the first gripper and the second gripper along the first limiting guide rail, thereby accomplishing the measurement and analysis of a target analyte contained in a sample to be tested. Thus, the analysis device in the present invention effectively solves the problem of poor usage performance of a sample analysis device in the related art.

It should be noted that, in an embodiment of the present invention, the first limiting guide rail is a linear rail, and the sample adding unit 60, the incubation unit 70, and the washing and separation unit 100 are sequentially arranged at intervals in a length direction of the first limiting guide rail. Furthermore, in the present invention, the sample adding unit 60 may be a sample reagent dispensing mechanism such as a sample adding disc, or may be a sample reagent mixing mechanism or a sample reagent dispensing and mixing mechanism.

In an embodiment, the incubation unit 70 includes at least a reaction incubation region 71 and a substrate incubation region 72. Furthermore, in the present invention, the first gripper is able to also transfer the reactor between at least two of the incubation unit 70, the sample adding unit 60, and the photometric unit 80. The second gripper is able to also transfer the reactor between at least two of the incubation unit 70, the washing and separation unit 100, and the photometric unit 80. That is to say, the first gripper is able to transfer the reactor between the reaction incubation region 71 and the sample adding unit 60, and the second gripper is able to transfer the reactor between the substrate incubation region 72 and the washing and separation unit 100. Furthermore, the first gripper is able to also transfer the reactor between the substrate incubation region 72 and the sample adding unit 60. Moreover, the second gripper is able to also transfer the reactor between the substrate incubation region 72 and the sample adding unit 60. In an embodiment, the second gripper is able to also transfer the reactor between the reaction incubation region 71 and the washing and separation unit 100. In an embodiment, the first gripper is able to also transfer the reactor between the substrate incubation region 72 and the photometric unit 80.

Of course, in the present invention, the respective scheduling ranges and reactor scheduling ranges of the first gripper and the second gripper and is able to also be changed on the basis of practical use requirements.

Furthermore, since the first gripper and the second gripper share the first limiting guide rail in a horizontal direction, the two grippers need corresponding coordinated actions during horizontal movement, so as to ensure that the working paths of the two grippers do not interfere with each other during the actual operation of cup gripping, preventing the two grippers from colliding with each other. Moreover, the two grippers operating in coordination with other may increase the overall operation efficiency of the two grippers.

In an embodiment, the first gripper and the second gripper move in the same direction on the first limiting guide rail. Of course, as long as the first gripper and the second gripper do not collide with each, the first gripper and the second gripper may also move in different directions.

In an embodiment, the incubation unit 70 includes an incubation driving assembly 73 and an incubation member 74, wherein the incubation member 74 has the reaction incubation region 71 and the substrate incubation region 72, and the incubation driving assembly 73 is able to drive the incubation member 74 to move relative to the first limiting guide rail in a horizontal direction, so as to enable a target reactor of the incubation unit 70 to be positioned on the movement trajectory of the dual-gripper assembly 50. Furthermore, the incubation driving assembly 73 has a second limiting guide rail, the second limiting guide rail and the first limiting guide rail being perpendicular to each other in a horizontal direction, and the incubation member 74 is able to reciprocate on the second limiting guide rail. In this embodiment, the incubation driving assembly 73 further includes a driving motor which is able to drive the incubation member 74, thereby ensuring that the incubation member 74 is able to move along the second limiting guide rail. Moreover, in the present invention, the incubation member 74 may be a disk-shaped incubation member or a quadrangular incubation member.

In an embodiment, the incubation member 74 is provided with a plurality of reactor receiving holes which are arranged in a rectangular array on the incubation member 74, the reaction incubation region 71 is close to the sample adding unit 60 with respect to the substrate incubation region 72, and the substrate incubation region 72 is close to the washing and separation unit 100 with respect to the reaction incubation region 71. Of course, in the present invention, the plurality of reactor receiving holes may also be arranged in a non-array form.

In an embodiment, the photometric unit 80 is arranged between the incubation unit 70 and the washing and separation unit in the length direction of the first limiting guide rail.

In an embodiment, the incubation unit 70 further includes a heating assembly which is arranged on the incubation member 74 and under the plurality of reactor receiving holes. In an embodiment, the incubation unit 70 further includes a measurement assembly which is in signal connection with the heating assembly. In the present invention, the measurement assembly may be a temperature sensor; and by means of such a configuration, the temperature of the incubation unit 70 is able to be measured, thereby ensuring that the incubation unit 70 is within a set temperature range.

It should be noted that, in the present invention, the sample adding unit 60, the incubation unit 70, the photometric unit 80, and the cleaning and separation unit 100 are respectively provided with operating positions for allowing a reactor to enter and exit, allowing for scheduling of the reactors among different units. Furthermore, in the present invention, both the first gripper and the second gripper are two-dimensional linear grippers; and in the present invention, the first limiting guide rail of the dual-gripper assembly 50 is generally arranged in a horizontal direction, so that the first gripper and the second gripper are able to not only move along a guide rail, but also move in a vertical direction relative to the first limiting guide rail, so as to ensure that the first gripper and the second gripper are able to grip or release a reactor. Of course, in the present invention, the first limiting guide rail is able to be replaced with a non-linear driving structure; in other words, the first gripper and the second gripper are able to be replaced with two dual-swing arm grippers.

The scheduling method in the present invention is applied to the described analysis device. The scheduling method includes: when a reaction incubation operation is to be performed, the first gripper removes a reactor from the sample adding unit 60 and places the reactor into the reaction incubation region 71 of the incubation unit 70; when a magnetic separation and washing operation is to be performed, the second gripper removes the reactor from the reaction incubation region 71 and places the reactor into the washing and separation unit 100; and when a substrate incubation operation is to be performed, the second gripper removes the reactor from the washing and separation unit 100 and places the reactor into the substrate incubation region 72 of the incubation unit 70.

In an embodiment, the scheduling method further includes: when the magnetic separation and washing operation has been done and a second-step reagent needs to be added, the second gripper removes the reactor from the washing and separation unit 100 and places the reactor into the substrate incubation region 72, and then the first gripper removes the reactor from the substrate incubation region 72 and places the reactor into the sample adding unit 60.

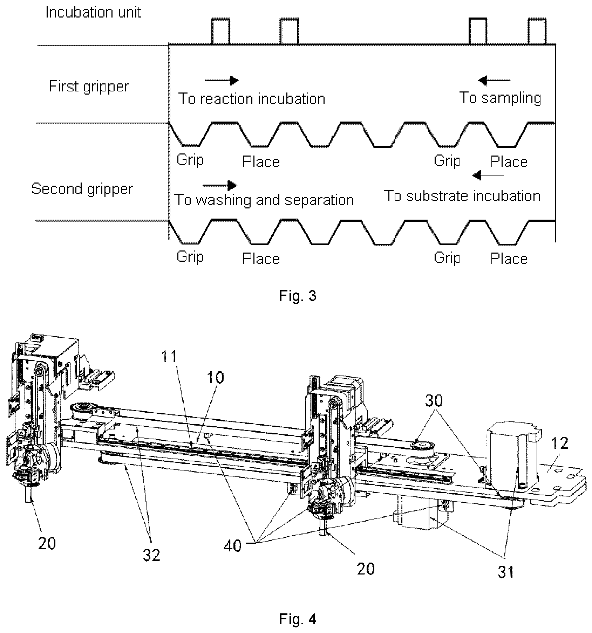

In the embodiment shown in Fig. 3, the first gripper and the second gripper move in the same direction, and the first gripper and the second gripper ascend or descend simultaneously. The scheduling method further includes: while the first gripper removes the reactor from the sample adding unit 60 and places the reactor into the reaction incubation region 71, the second gripper moves from the reaction incubation region 71 to the washing and separation unit 100; alternatively, while the first gripper removes the reactor from the incubation unit 70 and places the reactor into the sample adding unit 60, the second gripper removes a reactor from the washing and separation unit 100 and places the reactor into the substrate incubation region 72. Furthermore, the incubation unit 70 is able to be moved in the interval between the processes of the first gripper and the second gripper gripping and placing the reactor, thereby preventing the incubation unit 70 from colliding with the first gripper or the second gripper.

By means of such design, the action of the first gripper and the action of the second gripper may be separated from each other as far as possible in one period, and the reactor may be transferred from the washing and separation unit 100 to the sample reagent dispensing operation unit by means of relay of the two grippers. In this way, the efficiency of using the two grippers is maximized, and the overall vessel gripping efficiency is increased.

Moreover, when the dual-gripper assembly 50 is to grip a reactor of the incubation unit 70, the incubation unit 70 moves relative to the first limiting guide rail to cause the reactor to be gripped to align with the first limiting guide rail; and once the first gripper and the second gripper of the dual-gripper assembly 50 move along the first limiting guide rail to the corresponding position, one of the first gripper and the second gripper moves towards the incubation unit 70 relative to the first limiting guide rail and moves away from the incubation unit 70 after gripping the reactor. When the dual-gripper assembly 50 is to place a reactor into the incubation unit 70, the incubation unit 70 moves relative to the first limiting guide rail to cause an empty well for the placement of the reactor to align with the first limiting guide rail; and once moving along the first limiting guide rail to the corresponding position, one of the first gripper and the second gripper moves towards the incubation unit 70 relative to the first limiting guide rail and places the reactor into the empty well, and finally moves away from the incubation unit 70 relative to the first limiting guide rail. The purpose of such an operation is to prevent collision between the incubation unit 70 and the dual-gripper assembly 50 during movement, so that once gripping or releasing a reactor, the first gripper or the second gripper needs to move upwards in a vertical direction, so as to avoid the incubation module.

As shown in figure 4, the present invention also provides a gripper device which is the dual-gripper assembly 50 of the described analysis device, and mainly includes a guide rail assembly 10, linear grippers 20, driving assemblies 30, and a detection assembly 40. The guide rail assembly 10 has a plurality of running regions; there are a plurality of linear grippers 20, and at least one linear gripper 20 is movably arranged in each running region; there are a plurality of driving assemblies 30, each of which is in driving connection with at least one different linear gripper 20, enabling the linear grippers 20 to move in their respective running regions; and the detection assembly 40 is arranged on the guide rail assembly 10 and is in signal connection with the driving assemblies 30. Furthermore, in the embodiment described below, the linear grippers 20 are the first gripper and the second gripper described hereinabove. Furthermore, the guide rail assembly includes the described first limiting guide rail.

During use of the gripper device in the present invention, since at least one linear gripper 20 is movably arranged in each running region of the guide rail assembly 10, the linear grippers 20 in the plurality of running regions of the guide rail assembly 10 may work simultaneously, thereby satisfying the requirements for coordinated work of multiple stations. Moreover, since the gripper device in the present invention is further provided with the detection assembly 40 arranged on the guide rail assembly 10, the motion states of the linear grippers 20 in different running regions may be detected by the detection assembly 40, thereby preventing the linear grippers 20 in two adjacent running regions from colliding or interfering with each other. Thus, the gripper device in the present invention has the advantage of high working efficiency. Thus, the gripper device in the present invention effectively solves the problem in the related art that a gripper device cannot satisfy the use requirements for a large travel and multiple stations.

In an embodiment, the guide rail assembly 10 includes a mounting plate 11 and a guide rail body 12, wherein the guide rail body is the first limiting guide rail. The driving assembly 30 is provided on the mounting plate 11; and the rail body 12 is provided on the mounting plate 11 and has a plurality of running regions. That is to say, in the present invention, all the linear grippers 20 move on the same guide rail body 12. Furthermore, in the present invention, the detection assembly 40 is able to be arranged on the mounting plate 11 or the guide rail body 12. In the present invention, the provision of the mounting plate 11 not only facilities mounting of the gripper device in a preset working region, but also provides mounting positions for the driving assemblies 30 and the detection assembly 40 by means of the mounting plate 11.

In an embodiment of the present invention, the sides of two adjacent running regions close to each other have intersecting regions overlapping each other; the detection assembly 40 includes a plurality of first detection members; and at least one first detection member is provided in each intersecting region and is in signal connection with the driving assemblies 30 corresponding to the linear grippers 20 corresponding to the two running regions corresponding to the intersecting region. By means of such a configuration, when the linear grippers 20 of two adjacent running regions in the present invention move into the same intersecting region, the movement directions and speeds of the linear grippers 20 may be detected by means of the corresponding first detection member, and the movement of the linear grippers 20 may be determined on the basis of the detection result, thereby controlling the corresponding driving assemblies 30 to restrict the movement of the linear grippers 20, so as to prevent the linear grippers 20 from colliding in the intersection region. Thus, in the present invention, the provision of the first detection assembly 40 may effectively ensure the stable operation of the gripper device.

In an embodiment, the movement directions of all the linear grippers 20 in the intersecting region are the same. That is to say, when the linear grippers 20 in two adjacent running regions all move in the intersecting region, in order to prevent different linear grippers 20 from colliding with each other, the movement directions of the linear grippers 20 in the intersecting region may be restricted by controlling the driving assemblies 30, thereby preventing the linear grippers 20 from colliding with each other.

In an embodiment, the detection assembly 40 further includes a plurality of second detection members, at least one second detection member is arranged in the part of each running region which does not overlap with an adjacent running region, and is in signal connection with the driving assembly 30 corresponding to the linear gripper 20 in the corresponding running region. By means of such a configuration, the movement states of the linear grippers 20 in different running regions may be detected by means of the second detection members, thereby ensuring the stable operation of the gripper device.

In an embodiment, each driving assembly 30 includes a driving motor 31 and a synchronous belt structure 32. The driving motor 31 and the synchronous belt structure 32 are provided on the guide rail assembly 10, wherein the driving motor 31 is in drive connection with the synchronous belt structure 32, and the corresponding linear gripper 20 is in drive connection with the synchronous belt structure 32 and may move along the synchronous belt structure 32. That is to say, in the present invention, the driving motor 31 drives the synchronous belt structure 32 to rotate, thereby driving the corresponding linear gripper 20 by means of the synchronous belt structure 32 to move along the guide rail body 12 of the guide rail assembly 10.

In an embodiment of the present invention, there are two running regions, two linear grippers 20, and two driving assemblies 30; and the two driving motors 31 and the two synchronous belt structures 32 are located on the top surface and the bottom surface of the guide rail assembly 10, respectively. Furthermore, the two driving motors 31 are located at the same end in a length direction of the guide rail assembly 10 and arranged in a staggered manner in a length direction of the guide rail assembly 10. Moreover, the driving motor 31 and the synchronous belt structure 32 of the same driving assembly 30 are located on the top surface and the bottom surface of the guide rail assembly 10, respectively. Furthermore, the extension directions of the two synchronous belt structures 32 are the same. That is to say, in the present invention, two driving assemblies 30 are provided on the mounting plate 11 of the guide rail assembly 10, and both driving motors 31 of the two driving assemblies 30 are located at the same end in the length direction of the mounting plate 11, wherein one driving motor 31 is located on the top surface of the mounting plate 11, and the other driving motor 31 is located on the bottom surface of the mounting plate 11. Moreover, one of the two synchronous belt structures 32 is located on the top surface of the mounting plate 11, and the other is located on the bottom surface of the mounting plate 11; and the synchronous belt structure 32 located on the top surface of the mounting plate 11 is in drive connection with the driving motor 31 located on the bottom surface of the mounting plate 11, and the synchronous belt structure 32 located on the bottom surface of the mounting plate 11 is in drive connection with the driving motor 31 located on the top surface of the mounting plate 11. This can effectively ensure the overall structure of the gripper device to be more compact, and may also ensure that the two linear grippers 20 may move along the same guide rail body 12. Furthermore, since the two driving motors 31 and the two synchronous belt structures 32 are arranged to be spaced apart in the length direction of the guide rail body 12, the two synchronous belt structures 32 have an overlapping portion and a non-overlapping portion, the overlapping portion being the intersecting region of the two running regions.

In an embodiment, the detection assembly 40 further includes third detection members, wherein at least one third detection member is arranged at each of the ends of the two synchronous belt structures 32 far away from each other. In the present invention, the first detection members and the second detection members may be optical couplers, and the third detection members may include a direction sensor and a zero-position sensor, thereby preventing the two linear grippers 20 from colliding and interfering with each other during a return process.

In an embodiment of the present invention, the two linear grippers 20 move along two ends of the guide rail body 12, respectively, during a return process.

It should be noted that, while a linear gripper 20 in the present invention moves along the guide rail body 12, the gripper part of the linear gripper 20 may also move on the linear grip 20 in a direction perpendicular to the length direction of the guide rail body 12.

From the description hereinabove, it can be determined that the described embodiments of the present invention achieve the following technical effects:
1. The two two-dimensional linear grippers share the horizontal linear guide rail, reducing production and manufacturing costs.
2. No fixed avoiding space between the two grippers is needed, reducing the space required for layout, increasing the coverage and flexibility of the grippers, and being conductive to the compact structure and miniaturization of the whole machine.
3. The dual linear grippers are integrated with the movable incubation unit, and by enabling the two two-dimensional linear grippers to share the horizontal linear guide rail and coordinating scheduling of the dual linear grippers and the movable incubation unit, high-speed and wide-range scheduling of reactors is achieved; the embodiments of the present invention also have the advantages, namely a light weight and a fast speed, of two-dimensional linear grippers, increasing the testing speed and efficiency of the instrument.
4. The movable incubation member has high density of arrangement of reactor well positions, and almost has no vacant area; thus, the space utilization rate is high, and with the same number of well positions, the size is small and the space required by layout is small.

The above is only preferred embodiments of the present invention and is not intended to limit the present invention. A person skilled in the art may make various modifications and variations. Any modifications, equivalent replacements, improvements, etc. made within the spirit and principle of the present invention shall all fall within the scope of protection of the present invention.

## Claims

1. An analysis device, comprising a sample adding unit (60), an incubation unit (70), a washing and separation unit (100), a photometric unit (80), and a dual-gripper assembly (50), wherein the dual-gripper assembly (50) comprises a first limiting guide rail and a first gripper and a second gripper which are able to reciprocate along the first limiting guide rail, and both the first gripper and the second gripper are able to perform a reactor transfer operation on the incubation unit (70).

2. The analysis device as claimed in claim 1, wherein the dual-gripper assembly (50) is able to transfer a reactor from any one of the sample adding unit (60), the incubation unit (70), the washing and separation unit (100), and the photometric unit (80).

3. The analysis device as claimed in claim 2, wherein the incubation unit (70) at least comprises a reaction incubation region (71) and a substrate incubation region (72), the first gripper is able to at least transfer the reactor between the reaction incubation region (71) and the sample adding unit (60), and the second gripper is able to at least transfer the reactor between the substrate incubation region (72) and the washing and separation unit (100).

4. The analysis device as claimed in claim 2, wherein the first gripper is able to further transfer the reactor between at least two of the incubation unit (70), the sample adding unit (60), and the photometric unit (80).

5. The analysis device as claimed in claim 2, wherein the second gripper is able to further transfer the reactor between at least two of the incubation unit (70), the washing and separation unit (100), and the photometric unit (80).

6. The analysis device as claimed in claim 3, wherein there are a plurality of reactors, the incubation unit (70) comprises an incubation driving assembly (73) and an incubation member (74), the incubation member (74) is provided with the reaction incubation region (71) and the substrate incubation region (72), and the incubation driving assembly (73) is able to drive the incubation member (74) to move relative to the first limiting guide rail in a horizontal direction, enabling a target reactor of the plurality of reactors of the incubation unit (70) to be positioned on a movement trajectory of the dual-gripper assembly (50).

7. The analysis device as claimed in claim 6, wherein the incubation driving assembly (73) is provided with a second limiting guide rail, the second limiting guide rail and the first limiting guide rail being perpendicular to each other in a horizontal direction, and the incubation member (74) is able to reciprocate on the second limiting guide rail.

8. The analysis device as claimed in claim 6, wherein the incubation member (74) is provided with a plurality of reactor receiving holes which are arranged in a rectangular array on the incubation member (74).

9. The analysis device as claimed in any one of claims 1 to 8, wherein the first limiting guide rail is a linear rail, and the sample adding unit (60), the incubation unit (70), and the washing and separation unit (100) are sequentially arranged at intervals in a length direction of the first limiting guide rail.

10. The analysis device as claimed in claim 9, wherein the photometric unit (80) is arranged in the length direction of the first limiting guide rail between the incubation unit (70) and the washing and separation unit (100).

11. A scheduling method, wherein the scheduling method is applied to the analysis device as claimed in claim 3, and the scheduling method comprises:
when a reaction incubation operation is to be performed, the first gripper removing the reactor from the sample adding unit (60) and placing the reactor into the reaction incubation region (71) of the incubation unit (70);
when a magnetic separation and washing operation is to be performed, the second gripper removing the reactor from the reaction incubation region (71) and placing the reactor into the washing and separation unit (100); and
when a substrate incubation operation is to be performed, the second gripper removing the reactor from the washing and separation unit (100) and placing the reactor into the substrate incubation region (72) of the incubation unit (70).

12. The scheduling method as claimed in claim 11, wherein the scheduling method further comprises:
when the magnetic separation and washing operation has been done and a second-step reagent needs to be added, the second gripper removing the reactor from the washing and separation unit (100) and placing the reactor into the substrate incubation region (72), and then the first gripper removing the reactor from the substrate incubation region (72) and placing the reactor into the sample adding unit (60).

13. The scheduling method as claimed in claim 11, wherein the first gripper and the second gripper move in the same direction and ascend or descend simultaneously, and the scheduling method further comprises:
while the first gripper removes the reactor from the sample adding unit (60) and places the reactor into the reaction incubation region (71), the second gripper moving from the reaction incubation region (71) to the washing and separation unit (100); and
while the first gripper removes the reactor from the incubation unit (70) and places the reactor into the sample adding unit (60), the second gripper removing the reactor from the washing and separation unit (100) and placing the reactor into the substrate incubation region (72).
